# EUROPÄISCHE PATENTSCHRIFT

(11) **EP 1 053 775 B1**
(45) Veröffentlichungstag und Bekanntmachung des Hinweises auf die Patenterteilung: **07.04.2004**
(21) Anmeldenummer: 00110037.9
(22) Anmeldetag: 12.05.2000
(51) Int. Cl.: B01D 21/24, E03F 5/10, C02F 1/00, B01D 17/02

(54) **Drosselorgan und Speicherbecken**
Constriction member and storage tank.
Organe d' étranglement et bassin de stockage

(30) Priorität: 20.05.1999 DE 19923085
(43) Veröffentlichungstag der Anmeldung: 22.11.2000
(73) Patentinhaber: bgu-Umweltschutzanlagen GmbH, 74626 Bretzfeld (DE)
(72) Erfinder: Schlechtriem, Uwe Dipl.-Ing. (FH), 74245 Löwenstein-Hösslinsülz (DE)
(74) Vertreter: Hössle, Markus, Dipl.-Phys.

(56) Entgegenhaltungen:
- EP-A- 0 799 631
- WO-A-97/30230
- CH-A- 302 848
- FR-A- 1 063 200
- FR-A- 2 292 806
- GB-A- 1 340 865
- NL-C- 1 003 694
- US-A- 2 168 117
- US-A- 2 984 986
- US-A- 3 066 490
- US-A- 3 423 077
- US-A- 3 683 630
- US-A- 5 147 556
- DATABASE WPI Section PQ, Week 199824 Derwent Publications Ltd., London, GB; Class Q42, AN 1998-269641 XP002155674 & NL 1 003 694 C (HOOGHEEMRAADSCHAP STICHTSE RIJNLANDEN), 28. Januar 1998 (1998-01-28)

## Beschreibung

Die vorliegende Erfindung betrifft ein Drosselorgan zur Regelung gleichmäßiger Abflußmengen aus einem Speicherbecken sowie ein Speicherbecken zum Auffangen und verzögerten Weitergeben stoßweise anfallender Flüssigkeitsmengen.

Aus der US-PS 2 168 117 ist eine Vorrichtung zum Steuern von Flüssigkeitspegeln bekannt, die derart ausgelegt ist, daß sie sich im Gleichgewicht befindet, wenn der Wasserstand exakt auf der Höhe der Drehachse liegt. In diesem Zustand ist der Schwimmer der bekannten Vorrichtung teilweise eingetaucht und befindet sich im Gleichgewicht mit einem Gegengewicht bzw. in einer anderen beschriebenen Ausführungsform mit einem Auftriebsgewicht, das jeweils vollständig eingetaucht ist. Bei einem (leichten) Ansteigen des Wasserstandes überkommt das durch den Schwimmer erzeugte Moment das Moment des Gegengewichts und die gesamte Anordnung schwenkt im Uhrzeigersinn um die Drehachse aus dem Gleichgewicht bis sich der Boden des Schwimmers auf dem Wasserstand befindet. Sinkt der Wasserpegel, so ist das Moment des Gegengewichts größer als dasjenige des Schwimmers, und die Anordnung dreht sich entgegen des Uhrzeigersinns um die Drehachse bis der Schwimmer einen Anschlag erreicht.

Aus der DE 196 18 186 C2 ist eine Abflußregelvorrichtung für gleichmäßige Abflußmengen aus einem Speicherbecken mit einem vor einer Abflußöffnung in dem Becken verstellbaren Drosselorgan in Form eines Bogensegments bekannt. Das Bogensegment steht mit einem Schwimmerarm eines variierenden Aufstauhöhen folgenden Schwimmers in Antriebsverbindung und ist im Bogenkrümmungsmittelpunkt gelagert, während der Schwimmerarm auf einer gemeinsamen waagerechten Achse an einem Gestell gelagert ist. Der Abflußöffnungsumfang ist durch einen sich mindestens bis zum Verstellweg des Bogensegments im Becken erstreckenden rechteckigen, am Gestell festen Mantel begrenzt. Bei der bekannten Abflußregelvorrichtung ist der Schwimmer von einem an der höhenverstellbaren Unterseite offenen Glockengehäuse überdeckt und folgt in diesem Gehäuse in einem verkleinerten, nichtlinearen Maßstab der sich außerhalb des Gehäuses einstellenden Stauhöhe. Des weiteren ist der Schwimmer in einem oberen Wegbereich im Verstellbereich kleiner Öffnungsquerschnitte des Bogensegments mit einer der Schwimmer-Auftriebskraft entgegenwirkenden Federeinrichtung beaufschlagt, deren Kennlinie der Kennlinie der Schwimmer-Auftriebskraft stufenlos überlagert ist.

Ausgehend von diesem Stand der Technik liegt der Erfindung die Aufgabe zugrunde, ein Drosselorgan der eingangs genannten Art bereitzustellen, das einen vereinfachten, kompakten Aufbau aufweist.

Zur Lösung dieser Aufgabe wird erfindungsgemäß ein Drosselorgan mit den Merkmalen des Anspruches 1 vorgeschlagen. Demnach weist das einer Abflußöffnung des Speicherbeckens um eine Drehachse drehbar gelagert zugeordnete Drosselorgan einen Schwimmerabschnitt und einen Hohlkammerabschnitt auf. Der Schwimmerabschnitt des Drosselorgans verfügt über einen festen Verdrängungsschwerpunkt, während der Hohlkammerabschnitt einen veränderlichen Verdrängungsschwerpunkt aufweist. Bei variierender Aufstauhöhe stellt sich das Drosselorgan durch Drehung um die Drehachse derart ein, daß die beiden Verdrängungsschwerpunkte im wesentlichen auf einer horizontalen Linie liegen. Bei zunehmender Aufstauhöhe wird durch Beaufschlagung des Schwimmerabschnitts dieser mit dem steigenden Wasserstand nach oben genommen, wodurch eine Drehung des Drosselorgans um die Drehachse erfolgt. Durch die Drehung des Drosselorgans wird der dem Schwimmerabschnitt bezüglich der Drehachse gegenüberliegende Hohlkammerabschnitt abgesenkt und in den Wasseraufstau eingetaucht. Der Hohlkammerabschnitt ist wasserseitig zumindest teilweise offen und wird bei steigendem Aufstau vom Wasserspiegel verschlossen und es erfolgt eine Kompression des im Hohlkammerabschnitt verbleibenden Restluftvolumens nach Boyle-Mariotte. Dieses Restvolumen dient als "Luftfeder", d.h. es erfolgt eine kontinuierliche Abnahme der Drehung bei steigendem Wasserspiegel, wodurch eine Konstanthaltung der Abflußmenge erzielt wird. Somit kann bei dem erfindungsgemäßen Drosselorgan auf eine zusätzliche der Schwimmer-Auftriebskraft entgegenwirkende Federeinrichtung verzichtet werden.

In Ausgestaltung der Erfindung ist das Drosselorgan im wesentlichen halbzylinderförmig, was eine einfache Abdichtung ermöglicht und mit einer gleichmäßigen Gewichtsverteilung verbunden ist. Vorzugsweise ist ein erster Abschnitt des halbzylinderförmigen Drosselorgans zur Bildung des Schwimmerabschnitts dicht verschlossen. Der Schwimmerabschnitt kann auch durch Ausschäumen oder Ausfüllen mit einem sehr leichten, schwimmfähigen Material wie beispielsweise Styropor gebildet sein. Der verbleibende, nach unten zumindest teilweise offene Teil des Drosselorgans bildet den Hohlkammerabschnitt, dessen Volumen das Kompressionsvolumen darstellt. Somit sind erfindungsgemäß die drei aus dem Stand der Technik bekannten separaten Organe Schwimmer, Glocke und Bogensegment in einem einzigen Bauteil zusammengefaßt.

In Ausgestaltung der Erfindung ist das Drosselorgan mittels mindestens eines Ausgleichsgewichts oder einer verstellbaren Feder derart austariert, daß es in seiner Ruhestellung ohne Flüssigkeitsbeaufschlagung eine vorbestimmte im wesentlichen horizontale Lage einnimmt. Das Drosselorgan wird somit durch das Ausgleichsgewicht oder ein entsprechend gleichwirkendes Mittel wie beispielsweise eine verstellbare Feder in einer definierten Ruhestellung gehalten, die bei fehlendem Ausgleichsgewicht der labilen Gleichgewichtslage entsprechen würde. Dadurch wird erreicht, daß die Drehachse unterhalb der Masse des eigentlichen Drosselorgans liegt, wodurch der erfindungsgemäße Effekt der Einstellung der beiden Verdrängungsschwerpunkte auf einer horizontalen Linie oberhalb der Drehachse erzielt werden kann. Dieses Wirkprinzip gewährleistet, daß sich das Drosselorgan in jeder Arbeitsstellung bzw. Winkellage grundsätzlich in Gleichgewicht bezüglich seines Drehpunkts befindet. Im Falle der nachstehend noch ausführlich zu beschreibenden Ausgestaltung der Erfindung mit der Drehachse des Drosselorgans senkrecht zur Abflußrichtung ergibt sich ein bedeutender Vorteil, da bei einer Verlegung des Abflußquerschnitts durch Grobstoffe das Drosselorgan selbsttätig schnell und leicht ausweichen kann, um diese Grobstoffe passieren zu lassen und um danach unverzüglich wieder in die Gleichgewichtslage bzw. Arbeitsstellung zurückzuschwenken.

In weiterer vorteilhafter Ausgestaltung der Erfindung ist das Wirkvolumen des Hohlkammerabschnitts des Drosselorgans einstellbar, wodurch eine individuelle Einstellung und Anpassung der Abflußcharakteristik an örtliche Gegebenheiten möglich ist. Vorzugsweise erfolgt die Einstellung des Wirkvolumens mittels reversibel verschließ- oder verstopfbarer Öffnungen in den Hohlkammerabschnitt begrenzenden Wandungen.

In weiterer Ausgestaltung der Erfindung weist das Drosselorgan eine Einrichtung zur Feineinstellung einer Strömungsabrißkante mit Verstellmitteln zur Verstellung der Lage der Abrißkante auf. Vorzugsweise umfassen die Verstellmittel ein verstellbares Leitblech, das sich in besonders vorteilhafter Ausgestaltung der Erfindung im wesentlichen parallel zu einer die Abrißkante bildenden Unterkante des Drosselorgans erstreckt und senkrecht zu seiner Erstreckungsrichtung im Millimeterbereich über die Unterkante hinaus verstellbar ist. Dadurch kann durch eine geringe Verstellung der Lage der Abrißkante und der damit verbundenen Beeinflussung des Wirkquerschnitts der Abflußöffnung das Momentengleichgewicht am Drosselorgan gezielt und präzise eingestellt werden.

Zur weiteren Lösung der der Erfindung zugrundeliegenden Aufgabe wird ein Speicherbecken zum Auffangen und verzögerten Weitergeben stoßweise anfallender Flüssigkeitsmengen mit einem erfindungsgemäßen Drosselorgan vorgeschlagen.

Vorzugsweise ist das Drosselorgan einer Abflußöffnung des Speicherbeckens vorgeschaltet. In anderer, ebenfalls vorteilhafter Ausgestaltung ist das Drosselorgan in einem dem Speicherbecken nachgeschalteten Gehäuse angeordnet.

In weiterer vorteilhafter Ausgestaltung der Erfindung verläuft die Drehachse des Drosselorgans im wesentlichen senkrecht zur Abflußrichtung. In dieser Variante ist das Drosselorgan beispielsweise in Abflußrichtung vor der Abflußöffnung derart angeordnet, daß bei steigendem Flüssigkeitspegel das Drosselorgan um die senkrecht zur Strömungsrichtung verlaufende Drehachse in den Bereich der Abflußöffnung hineindreht und den. Querschnitt der Abflußöffnung verkleinert.

In anderer vorteilhafter Ausgestaltung der Erfindung verläuft die Drehachse des Drosselorgans im wesentlichen parallel zur Abflußrichtung. In dieser Variante kann das Drosselorgan sehr schmal, beispielsweise als Halbscheibe ausgebildet sein, die sich mit steigendem Flüssigkeitspegel vor die Abflußöffnung dreht und deren Querschnitt verkleinert.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich erläutert.
- Figur 1: zeigt in stark schematischer Darstellung ein erfindungsgemäßes Drosselorgan in seitlicher Ansicht.
- Figur 2: zeigt das Drosselorgan der Figur 1 in perspektivischer Ansicht.
- Figur 3: zeigt ein erstes Ausführungsbeispiel für eine Anordnung eines erfindungsgemäßen Drosselorgans mit senkrecht zur Abflußrichtung verlaufender Drehachse in seitlicher Ansicht (Figur 3a) und in Frontansicht (Figur 3b).
- Figur 4: zeigt ein zweites Ausführungsbeispiel für eine Anordnung eines erfindungsgemäßen Drosselorgans mit parallel zur Abflußrichtung verlaufender Drehachse in seitlicher Ansicht (Figur 4a) und in Frontansicht (Figur 4b).
- Figur 5: zeigt die Anordnung der Figur 3 mit einem Ausgleichsgewicht in in Abflußrichtung gesehen linker Seitenansicht (Figur 5a) und in rechter Seitenansicht (Figur 5b).
- Figur 6: zeigt die Anordnung der Figur 3 mit einer verstellbaren Feder.
- Figur 7: zeigt in vergrößerter seitlicher Darstellung einen Ausschnitt aus dem Drosselorgan der Figur 1 mit einer erfindungsgemäßen Feineinstellungseinrichtung für die Strömungsabrißkante.

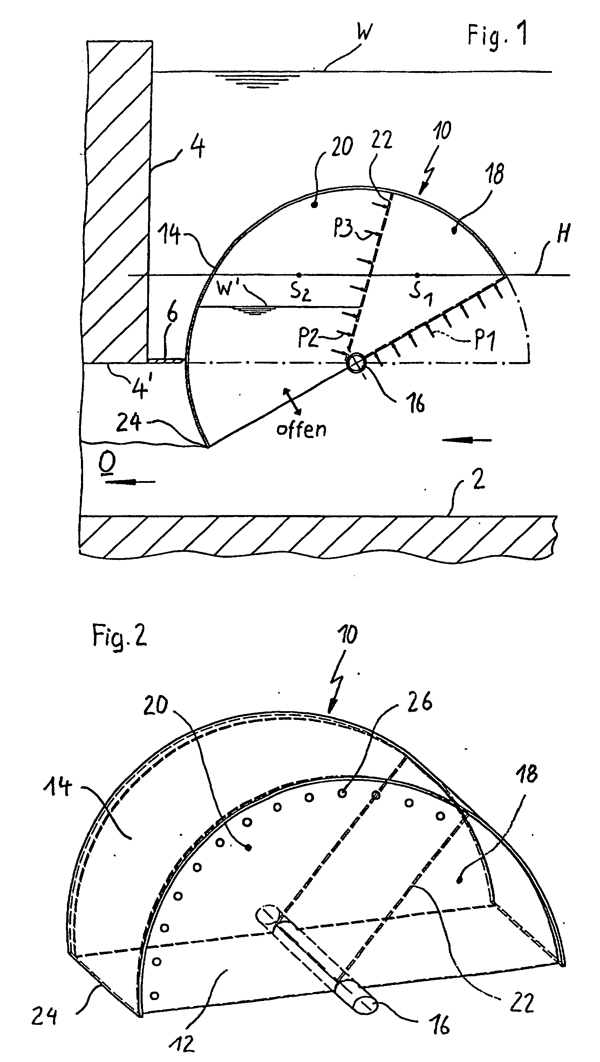

Die Figuren 1 und 2 zeigen in stark schematischer Darstellung ein erfindungsgemäßes Drosselorgan 10 in seitlicher Ansicht (Figur 1) bzw. perspektivischer Ansicht (Figur 2). Im Falle der Figur 2 ist das Drosselorgan 10 in seiner Ruhestellung dargestellt, während im Falle der Figur 1 eine Wirkstellung (verschwenkte Stellung) des Drosselorgans 10 mit angedeutetem Außenwasserspiegel W und Innenwasserspiegel W' dargestellt ist.

Das erfindungsgemäße Drosselorgan 10 weist im wesentlichen Halbzylinderform auf mit zwei halbkreisförmigen Seitenflächen 12 und einer Teilmantelfläche 14. Der durch die beiden Seitenflächen 12 und die Mantelfläche 14 gebildete Hohlkörper des Drosselorgans 10 ist um eine Drehachse 16 drehbar gelagert, die senkrecht durch die Kreismittelpunkte der halbkreisförmigen Seitenflächen verläuft.

Ein erster, hier kreissektorförmiger Abschnitt des Hohlkörpers des Drosselorgans 10 ist zur Bildung eines Schwimmerabschnitts 18 allseitig luftdicht abgeschlossen. Der Schwimmerabschnitt 18 kann als abgeschlossener Hohlraum ausgebildet oder auch mit einem geeigneten schwimmfähigen Material ausgefüllt bzw. ausgeschäumt sein. Der Schwimmerabschnitt 18 verläuft von der Drehachse aus entlang dem geraden Abschnitt der Seitenwände 12 radial nach außen bis zur Mantelfläche 14, so daß der Hohlkörper des Drosselorgans 10 auf einer Seite von der Drehachse 16 bis zur Mantelfläche 14 dicht geschlossen ist. Insgesamt weist die Schwimmerkammer 18 im wesentlichen eine Kuchenform auf, deren Spitze mit der Drehachse 16 zusammenfällt.

Der verbleibende Hohlraum des Hohlkörpers des Drosselorgans 10 bildet einen Hohlkammerabschnitt 20, wobei zwischen dem Schwimmerabschnitt 18 und dem Hohlkammerabschnitt 20 eine dicht ausgebildete Trennwand 22 vorgesehen ist. Der Hohlkammerabschnitt 20 ist in der in Figur 2 gezeigten Ruhestellung des Drosselorgans 10 nach unten hin offen.

Im Betrieb ist das erfindungsgemäße Drosselorgan 10 in einem Speicherbecken angeordnet, von dem in der Figur 1 im Ausschnitt eine durch einen Beckengrund 2 und eine Wandung 4 begrenzte Abflußöffnung 0 dargestellt ist. Das Drosselorgan 10 ist der Abflußöffnung O zugeordnet in dem Speicherbecken angeordnet, wobei das Drosselorgan 10 in seiner strichpunktiert dargestellten Ruhestellung mit seiner Unterseite im wesentlichen auf gleicher Höhe mit der die Abflußöffnung O nach oben begrenzenden Unterseite 4' der Wandung 4 liegt. Ein eventuell zwischen Drosselorgan 10 und Wandung 4 vorhandener Zwischenraum wird durch ein von der Wandung 4 abkragendes, im wesentlichen gerades Element 6 überbrückt. Bei steigendem Wasserstand findet eine Beaufschlagung der Unterseite des in der stichpunktiert dargestellten Ruhestellung befindlichen Drosselorgans 10 statt. Dadurch wird zum einen der nach unten offene Hohlkammerabschnitt 20 durch den steigenden Wasserstand geschlossen und zum anderen durch Mitnahme des in der Darstellung der Figur 1 rechts liegenden Schwimmerabschnitts 18 eine Drehbewegung , des Drosselorgans um die Drehachse 16 verursacht. Der steigende Wasserstand bewirkt somit durch die Beaufschlagung des Schwimmerabschnitts 18 im Sinne der Pfeile P1 eine Anhebung des Schwimmerabschnitts 18 und durch die damit verbundene Drehung des Drosselorgans 10 eine Absenkung des Hohlkammerabschnitts 20. Das Drosselorgan 10 befindet sich somit in jeder Phase des Betriebs im Gleichgewicht bezüglich seines Drehpunktes.

Bei weiter steigendem Wasserstand dringt etwas Wasser von unten in den Hohlkammerabschnitt 20 des Drosselorgans 10 ein. Aufgrund der dichten Ausgestaltung des Hohlkörpers des Drosselorgans 10 und der Trennwand 22 zwischen Schwimmerabschnitt 18 und Hohlkammerabschnitt 20 findet durch den zunehmenden Wasserdruck eine Kompression des in dem Hohlkammerabschnitt 20 befindlichen Luftvolumens statt. Die Darstellung der Figur 1 zeigt das Drosselorgan 10 bei einem Wasserstand W, der oberhalb des höchsten Punktes des Drosselorgans 10 liegt, d.h. das Drosselorgan 10 ist vollständig eingetaucht. In diesem Zustand befindet sich das Drosselorgan 10 in der in Figur 1 dargestellten gedrehten Stellung, bei der innerhalb des Hohlkammerabschnitts 20 ein Wasserstand W' vorliegt und das Luftvolumen auf den verbleibenden Bereich des Hohlkammerabschnitts 20 komprimiert ist. Dadurch wirken auf den Schwimmerabschnitt 18 dem Auftrieb im Sinne der Pfeile P1 entgegenwirkende Kräfte aufgrund des die Trennwand 22 beaufschlagenden Wassers (Pfeile P2) und des komprimierten Luftvolumens (Pfeile P3). Der Hohlkammerabschnitt 20 stellt somit eine "Luftfeder" dar, da durch Kompression des Luftvolumens in dem Hohlkammerabschnitt 20 eine der durch den Auftrieb des Schwimmerabschnitts 18 verursachten Drehung des Drosselorgans 10 entgegenwirkende Kraft erzeugt wird, die eine kontinuierliche Abnahme der schwimmerbedingten Drehung des Drosselorgans 10 und dadurch ein Konstanthalten des Abflusses bewirkt. Dabei stellt sich das Drosselorgan 10 in jeder Phase des Betriebs derart ein, daß ein fester bzw. fixer Verdrängungsschwerpunkt S₁ des Schwimmerabschnitts 18 und ein in seiner Lage veränderlicher Verdrängungsschwerpunkt S₂ des Hohlkammerabschnitts 20 stets auf einer horizontalen Linie H zu liegen kommen.

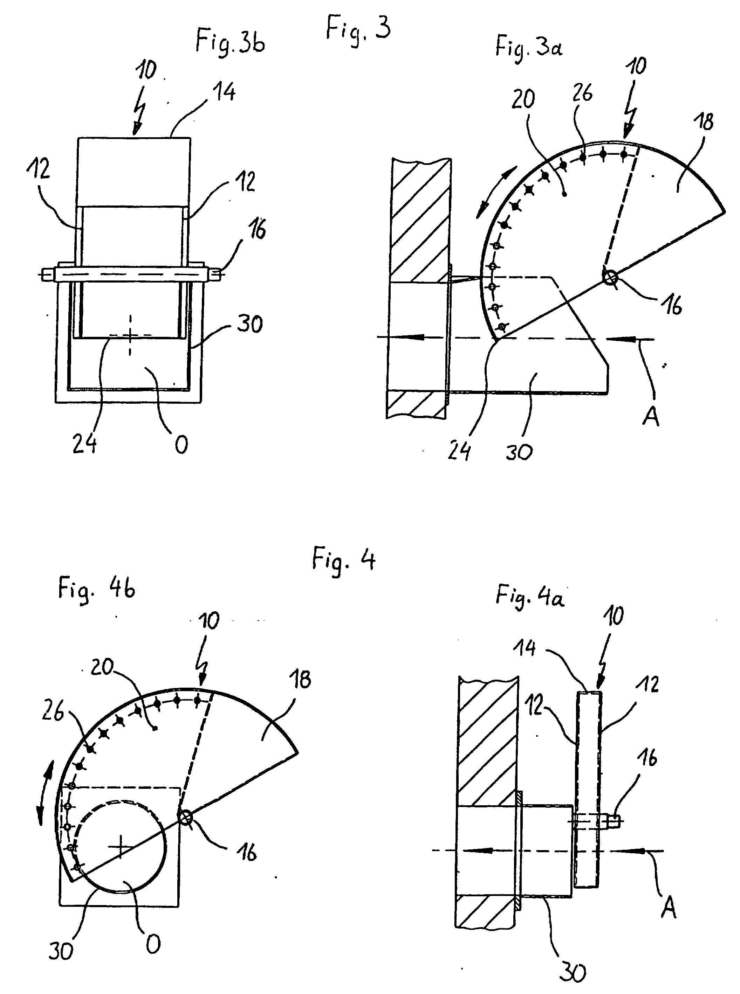

Für die Anordnung eines erfindungsgemäßen Drosselorgans vor einer Abflußöffnung eines Speicherbeckens gibt es zwei vorteilhafte Möglichkeiten, die nachfolgend unter Bezugnahme auf die Figuren 3 und 4 beschrieben werden.

Eine erste Möglichkeit besteht darin, das erfindungsgemäße Drosselorgan 10 derart anzuordnen, daß die Drehachse 16 im wesentlichen senkrecht zur Abflußrichtung A des in einem Speicherbecken angestauten Wassers durch eine Abflußöffnung O verläuft. In dem in den Figuren 3a und 3b dargestellten Ausführungsbeispiel ist der Auslauf des Speicherbeckens durch ein im wesentlichen rechteckiges Gehäuse 30 gebildet, das den Querschnitt der Abflußöffnung O begrenzt. Bei einer Drehung des Drosselorgans 10 um die Drehachse 16 im Sinne des eingezeichneten Doppelpfeiles wird der Wirkquerschnitt der Abflußöffnung O durch die Unterkante 24 des Hohlkammerabschnitts 20 des Drosselorgans 10 verändert.

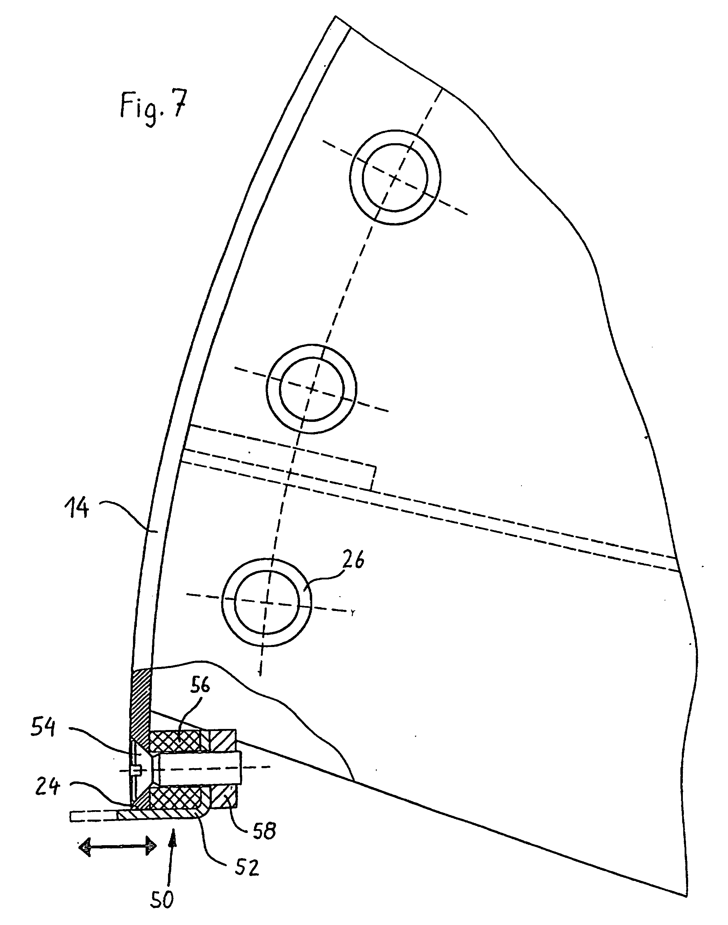

An der eine Strömungsabrißkante bildenden Unterkante 24 des Hohlkammerabschnitts 20 kann eine Einrichtung 50 zur Feineinstellung der Abflußcharakteristik angeordnet sein. Eine derartige Einrichtung 50 zur Feineinstellung ist in der Figur 7 dargestellt. Erfindungsgemäß umfaßt die Feineinstellungseinrichtung 50 ein mittels Stellschrauben 54 verstellbares Leitblech 52. Aus Gründen der Übersichtlichkeit ist in der Figur 7 nur eine Stellschraube 54 dargestellt. Die Stellschrauben 54 sind durch das Mantelblech 14 des Drosselorgans 10 gebohrt und reichen durch ein hinter dem Mantelblech 14 angeordnetes elastomeres Element 56 und eine hinter dem elastomeren Element 56 angeordnete Andruckleiste 58. Das Leitblech 52 ist zwischen dem elastomeren Element 56 und der Andruckleiste 58 angeordnet. Aufgrund seiner gewinkelten Ausgestaltung mit einem Winkel von im wesentlichen 90° erstreckt sich das Leitblech 52 zuerst zwischen dem elastomeren Element 56 und der Andruckleiste 58 und danach im wesentlichen entlang des elastomeren Elements 56 in Richtung der Unterkante 24 des Mantelblechs 14.

Durch entsprechendes Drehen der Stellschrauben ist das Leitblech 52 derart verstellbar, daß es bis mehrere Millimeter im wesentlichen senkrecht über die Unterkante 24 des Mantelblechs 14 hinaus bewegbar einstellbar und in der gewünschten Position festlegbar ist. Durch diese Einrichtung kann unter zusätzlicher Ausnutzung der Strömungsverhältnisse im Abflußquerschnitt gezielt und präzise in das Momentengleichgewicht am Drosselorgan eingegriffen werden, wodurch eine Feineinstellung der Abflußcharakteristik des Drosselorgans über den gesamten Arbeitsbereich ermöglicht wird. Selbstverständlich ist die Feineinstellungseinrichtung 50, insbesondere die Ausgestaltung der verstellbaren Befestigung des Leitblechs, nicht auf das in der Figur 7 dargestellte Ausführungsbeispiel beschränkt, sondern es sind auch andere Ausführungsformen möglich, bei denen mit einfachen Mitteln eine Feineinstellung im Millimeterbereich der Abrißkante gestattet wird.

Eine zweite Möglichkeit der Anordnung des erfindungsgemäßen Drosselorgans 10 besteht in der in den Figuren 4a und 4b dargestellten Anordnung, bei der die Drehachse 16 des Drosselorgans 10 im wesentlichen parallel zur Abflußrichtung A verläuft. In dieser Ausführung kann das Drosselorgan 10, wie in Figur 4a veranschaulicht ist, bedeutend schmaler ausgeführt werden, da nun nicht mehr die Innenseite der Mantelfläche 14 des Hohlkammerabschnitts 20 mit der Unterkante 24 zur Verkleinerung des Querschnitts der Abflußöffnung O dient, sondern die Seitenwandung 12, die bei einer Drehung des Drosselorgans 10 im Sinne des eingezeichneten Doppelpfeiles vor den Querschnitt der durch das Gehäuse 30 gebildeten Abflußöffnung O geschwenkt wird.

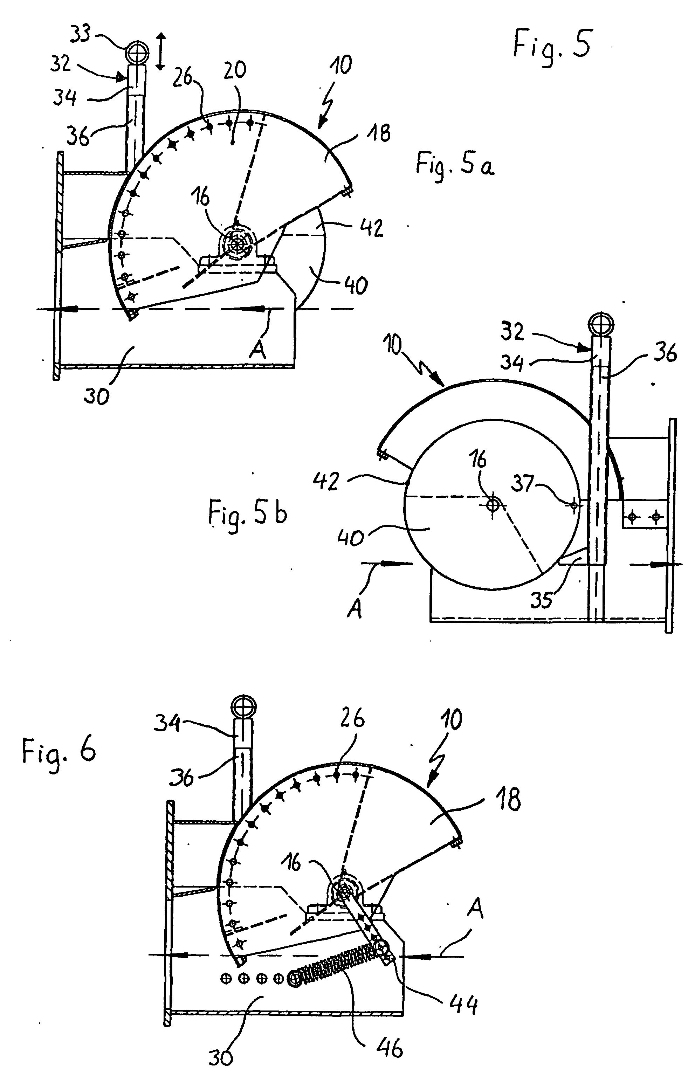

Um das erfindungsgemäße Drosselorgan 10 in der gewünschten, an sich dem labilen Gleichgewicht entsprechenden Ruhestellung halten zu können, kann zum Massenausgleich und zur Justierung der Durchflußmenge mindestens ein Ausgleichsgewicht vorgesehen sein, wie dies in den Figuren 5a und 5b veranschaulicht ist. Das Ausgleichsgewicht 40 ist vorteilhafterweise direkt auf der Drehachse 16 des Drosselorgans 10 asymmetrisch angeordnet. Zum Schutz des Ausgleichsgewichts 40 vor Verschmutzung ist ein Gehäuse 42 vorgesehen, das vorteilhafterweise ausgeschäumt oder mit Styropor gefüllt ist, um das Eindringen von Schmutz und Fremdkörpern zu verhindern. Das Ausgleichsgewicht 40 hat in dem dargestellten Ausführungsbeispiel die Form einer Kreissegmentscheibe mit einem Winkel von ca. 120°, wobei zum Anpassen/Einstellen der Masse des Ausgleichsgewichts mehrere Scheiben vorgesehen sein können, die zur individuellen Einstellung hinzufügbar oder wegnehmbar sind. Die Anordnung kann auf einer oder auch auf beiden Seiten des Drosselorgans erfolgen. Vorzugsweise sind die einzelnen Kreissegmentscheiben des Ausgleichsgewichts 40 im Winkel relativ zum Drosselorgan 10 unabhängig voneinander verstell- und arretierbar. Bei mehreren Ausgleichsgewichten kann jeweils ein Gehäuse zum Schutz vor Verschmutzung vorgesehen sein. Der im Gehäuse der Gewichtsscheiben verbleibende Hohlraum von ca. 240° ist ausgeschäumt oder mit Styropor gefüllt, um die Einlagerung von Schmutz im Gehäuseinneren zu verhindern. Darüber hinaus wird durch die Wasserverdrängung des Füllstoffes in dem verbleibenden Hohlraum und dem daraus resultierenden Auftrieb im überstauten Betrieb des Drosselorgans ein zusätzliches Moment auf die Drehachse 16 ausgeübt, das in dieselbe Richtung dreht wie das durch das Ausgleichsgewicht selbst hervorgerufene Drehmoment, so daß eine Einsparung am Gesamtgewicht ermöglicht wird.

Alternativ zu dem beschriebenen Ausgleichsgewicht 40 kann an der Drehachse 16 ein Hebel 44 vorgesehen sein, der mit einer beispielsweise am Auslaufgehäuse 30 befestigten Zügfeder 46 verbunden ist, die die erforderliche Ausgleichsund Rückstellkraft für das Drosselorgan 10 aufbringt. Zur Einstellung der Größe und des Verlaufs der Ausgleichskraft und zur Anpassung an die Zugfeder 46 ist der Hebel 44 ebenfalls im Winkel relativ zum Drosselorgan und auch in seiner Länge verstellbar. Darüber hinaus ist zur Einstellung der Ausgleichskraft die Zugfeder 46 an verschiedenen Stellen des Auslaufgehäuses 30 anbringbar, so daß eine Feineinstellung des auf die Welle der Drehachse 16 des Drosselorgans 10 ausgeübten Drehmoments möglich ist.

Um die Abflußöffnung 0 jederzeit von Hand öffnen zu können, ist seitlich am Auslaufgehäuse 30 ein Handzug 32 angebracht, der aus zwei teleskopartig ineinander gesteckten Vierkantrohren 34, 36, von denen das innere Rohr 36 fest mit dem Auslaufgehäuse 30 verbunden und das äußere Rohr 34 beweglich über das erste Rohr 36 gesteckt ist. An dem beweglichen Rohr 34 ist eine Öse 33 zum Anbringen eines Seilzuges oder dergleichen angebracht, während sich an dem unteren Ende des beweglichen Rohres 34 ein Mitnehmer 35 befindet, der das Drosselorgan 10 über einen an dem Gehäuse des Drosselorgans angebrachten Nocken 37 bei Bewegung des beweglichen Rohres 34 nach oben in Offenstellung drehen kann.

Das erfindungsgemäße Drosselorgan ist selbstverständlich nicht auf die beschriebenen Ausführungsformen und die halbzylindrische Form beschränkt. Aufgrund der gleichmäßigen Gewichtsverteilung und einfachen Abdichtung erweist sich die beschriebene halbzylindrische Form als besonders günstig, jedoch sind auch andere Geometrien für das erfindungsgemäße Drosselorgan möglich.

Um eine möglichst individuell anpaßbare Funktionalität des erfindungsgemäßen Drosselorgans zu erreichen, ist dessen Wirkvolumen in dem Hohlkammerabschnitt vorteilhafterweise einstellbar. Dies kann mittels in den Seitenwandungen 12 des Drosselorgans 10 vorgesehenen Öffnungen 26 erreicht werden, die reversibel verschließ- bzw. verstopfbar sind. Dadurch kann eingestellt werden, ab welchem Schwenkweg der von außen steigende Wasserspiegel das verbleibende Restvolumen in dem Hohlkammerabschnitt einschließt und komprimiert. Selbstverständlich können diese Öffnungen auch in der Mantelfläche 14 vorgesehen sein.

Das erfindungsgemäße Drosselorgan eignet sich zur Anordnung in einem nicht näher dargestellten Speicherbecken beispielsweise direkt im Oberwasser (nasse Anordnung) oder auch außerhalb des Speicherbeckens (trockene Anordnung) in einem dem Speicherbecken nachgeschalteten Gehäuse mit Entlüftungsmöglichkeit.

## Patentansprüche

1. Drosselorgan zur Regelung gleichmäßiger Abflußmengen aus einem Speicherbecken, das dazu bestimmt ist, einer Abflußöffnung (O) des Speicherbeckens derart drehbar um eine im wesentlichen horizontale Drehachse (16) gelagert zugeordnet zu werden, daß es durch eine Drehung um die Drehachse (16) den abflußwirksamen Querschnitt der Abflußöffnung (O) verändert, **dadurch gekennzeichnet, daß** das Drosselorgan (10) einen Schwimmerabschnitt (18) mit einem festen Verdrängungsschwerpunkt (S₁) und einen wasserseitig zumindest teilweise offenen Hohlkammerabschnitt (20) aufweist, wobei der Hohlkammerabschnitt (20) aufgrund von bei sich variierender Aufstauhöhe (W) in dem Speicherbecken eintretender Flüssigkeit und einer damit verbundenen Kompression des in dem Hohlkammerabschnitt (20) verbleibenden Restluftvolumens einen veränderlichen Verdrängungsschwerpunkt (S₂) aufweist, derart daß sich bei variierender Aufstauhöhe (W) in dem Speicherbecken durch eine waagenartige Drehung des Drosselorgans um die Drehachse (16) die beiden beiderseits der Drehachse (16) liegenden Verdrängungsschwerpunkte (S₁, S₂) im wesentlichen auf einer horizontalen Linie (4) liegend einstellen.

2. Drosselorgan nach Anspruch 1, das im wesentlichen halbzylinderförmig ist.

3. Drosselorgan nach einem der vorstehenden Ansprüche, das mittels mindestens eines Ausgleichsgewichts (40) oder einer verstellbaren Feder (46) derart austariert ist, daß es in seiner Ruhestellung ohne Flüssigkeitsbeaufschlagung eine im wesentlichen horizontale Lage einnimmt.

4. Drosselorgan nach einem der vorstehenden Ansprüche, bei dem das Wirkvolumen des Hohlkammerabschnitts (20) einstellbar ist.

5. Drosselorgan nach Anspruch 4, dessen den Hohlkammerabschnitt (20) begrenzende Wandungen (12, 14) reversibel verschließ- oder verstopfbare Öffnungen (26) aufweisen.

6. Drosselorgan nach einem der Ansprüche 1 bis 5, bei dem im Bereich einer die Strömungsabrißkante bildenden Unterkante (24) eine Einrichtung (50) zur Feineinstellung der Strömungsabrißkante vorgesehen ist.

7. Drosselorgan nach Anspruch 6, mit einer Einrichtung zur Feineinstellung einer Strömungsabrißkante mit Verstellmitteln (52, 54) zur Verstellung der Lage der Abrißkante.

8. Drosselorgan nach Anspruch 7, bei dem die Verstellmittel ein verstellbares Leitblech (52) umfassen.

9. Drosselorgan nach Anspruch 8, bei dem sich das Leitblech (52) im wesentlichen senkrecht zu einer die Abrißkante bildenden Unterkante (24) des Drosselorgans (10) erstreckt und in seiner Erstreckungsrichtung im Millimeterbereich über die Unterkante (24) hinaus verstellbar ist.

10. Speicherbecken zum Auffangen und verzögerten Weitergeben stoßweise anfallender Flüssigkeitsmengen, mit einem Drosselorgan (10) nach einem der Ansprüche 1 bis 9.

11. Speicherbecken nach Anspruch 10, bei dem das Drosselorgan (10) einer Abflußöffnung (O) des Speicherbeckens vorgeschaltet angeordnet ist.

12. Speicherbecken nach Anspruch 10, bei dem das Drosselorgan (10) in einem dem Speicherbecken nachgeschalteten Gehäuse angeordnet ist.

13. Speicherbecken nach einem der Ansprüche 10 bis 12, bei dem die Drehachse (16) des Drosselorgans (10) im wesentlichen senkrecht zur Abflußrichtung verläuft.

14. Speicherbecken nach einem der Ansprüche 10 bis 12, bei dem die Drehachse (16) des Drosselorgans (10) im wesentlichen parallel zur Abflußrichtung verläuft.

## Claims

1. Throttle member for regulating uniform quantities of outflow from a storage reservoir, which is intended to be mounted so as to be rotatable about a substantially horizontal rotation axis (16) and associated with an outflow opening (O) of the storage reservoir in such a way that by rotation about the rotation axis (16) it alters the effective cross section of flow of the outflow opening (O), **characterised in that** the throttle member (10) has a float section (18) with a fixed centre of buoyancy (S₁) and a hollow chamber section (20) which is at least partly open on the water side, the hollow chamber section (20) having a variable centre of buoyancy (S₂) on account of the liquid that enters it as the banking-up level (W) in the storage reservoir varies and the associated compression of the residual air volume remaining in the hollow chamber section (20), so that as the banking-up level (W) in the storage reservoir varies, as a result of the rotation of the throttle member about the rotation axis (16) in the manner of a weighing scale, the two centres of buoyancy (S₁, S₂) located either side of the rotation axis (16) come to lie substantially on a horizontal line (4).

2. Throttle member according to claim 1 which is substantially semicylindrical in shape.

3. Throttle member according to one of the preceding claims which is calibrated by means of at least one counter-weight (40) or an adjustable spring (46) so that in its resting position without any liquid acting thereon it assumes a substantially horizontal position.

4. Throttle member according to one of the preceding claims, wherein the effective volume of the hollow chamber section (20) is adjustable.

5. Throttle member according to claim 4, wherein the walls (12, 14) which delimit the hollow chamber section (20) have openings (26) which can be reversibly closed or blocked off.

6. Throttle member according to one of claims 1 to 5, wherein in the region of a lower edge (24) which forms the flow stalling edge there is provided a device (50) for fine adjustment of the flow stalling edge.

7. Throttle member according to claim 6, with a device for fine adjustment of a flow stalling edge with adjustment means (52, 54) for altering the position of the stalling edge.

8. Throttle member according to claim 7, wherein the adjustment means comprise an adjustable baffle plate (52).

9. Throttle member according to claim 8, wherein the baffle plate (52) extends substantially perpendicular to a lower edge (24) of the throttle member (10) forming the stalling edge and can be moved by millimetres beyond the lower edge (24) in its direction of extension.

10. Storage reservoir for collecting and subsequently delivering quantities of liquid arriving spasmodically, comprising a throttle member (10) according to one of claims 1 to 9.

11. Storage reservoir according to claim 10, wherein the throttle member (10) is mounted upstream of an outflow opening (O) of the storage reservoir.

12. Storage reservoir according to claim 10, wherein the throttle member (10) is mounted in a housing arranged downstream of the storage reservoir.

13. Storage reservoir according to one of claims 10 to 12, wherein the rotation axis (16) of the throttle member (10) extends substantially perpendicularly to the direction of outflow.

14. Storage reservoir according to one of claims 10 to 12, wherein the rotation axis (16) of the throttle member (10) extends substantially parallel to the direction of outflow.

## Revendications

1. Organe d'étranglement pour régler des débits réguliers hors d'un bassin de stockage, qui est destiné à être monté en étant associé à un orifice d'écoulement (O) du bassin de stockage de manière rotative autour d'un axe de rotation (16) sensiblement horizontal, de telle sorte que par une rotation autour de l'axe de rotation (16), il fait varier la section active à l'écoulement de l'orifice d'écoulement (O), **caractérisé en ce que** l'organe d'étranglement (10) présente un tronçon de flotteur (18) avec un centre de poussée (S₁) fixe et un tronçon de chambre creuse (20) au moins partiellement ouvert côté eau, le tronçon de chambre creuse (20) présentant un centre de poussée (S₂) variable en raison de l'entrée de liquide lorsque la hauteur d'accumulation (W) varie dans le bassin de stockage et en raison d'une compression liée à celle-ci du volume d'air résiduel restant dans le tronçon de chambre creuse (20), de telle sorte que lorsque la hauteur d'accumulation (W) varie dans le bassin de stockage, les deux centres de poussée (S₁, S₂) situés des deux côtés de l'axe de rotation s'établissent sensiblement sur une ligne horizontale (4) par une rotation à la manière d'une balance.

2. Organe d'étranglement selon la revendication 1, qui a sensiblement la forme d'un demi-cylindre.

3. Organe d'étranglement selon l'une des revendications précédentes, qui est taré au moyen d'au moins un poids de compensation (40) ou d'un ressort réglable (46) de telle sorte que dans sa position de repos non sollicitée par liquide, il prend une position sensiblement horizontale.

4. Organe d'étranglement selon l'une des revendications précédentes, dans lequel le volume actif du tronçon de chambre creuse (20) est réglable.

5. Organe d'étranglement selon la revendication 4, dont les parois (12, 14) limitant le tronçon de chambre creuse (20) présentent des orifices (26) qui peuvent être fermés ou bouchés de manière réversible.

6. Organe d'étranglement selon l'une des revendications 1 à 5, dans lequel il est prévu dans la région d'une arête inférieure (24) formant l'arête de détachement de courant un dispositif (50) pour le réglage fin de l'arête de détachement de courant.

7. Organe d'étranglement selon la revendication 6, comportant un dispositif de réglage fin d'une arête de détachement de courant avec des moyens de réglage (52, 54) pour régler la position de l'arête de détachement.

8. Organe d'étranglement selon la revendication 7, dans lequel les moyens de réglage comprennent une tôle de guidage (52) réglable.

9. Organe d'étranglement selon la revendication 8, dans lequel la tôle de guidage (52) s'étend sensiblement perpendiculairement à une arête inférieure (24) de l'organe d'étranglement (10), arête formant l'arête de détachement et est réglable au-delà de l'arête inférieure (24) dans sa direction d'extension dans la plage des millimètres.

10. Bassin de stockage pour recueillir et transmettre avec retard des quantités de liquide arrivant de manière intermittente, comportant un organe d'étranglement (10) selon l'une des revendications 1 à 9.

11. Bassin de stockage selon la revendication 10, dans lequel l'organe d'étranglement (10) est agencé en amont d'un orifice d'écoulement (O) du bassin de stockage.

12. Bassin de stockage selon la revendication 10, dans lequel l'organe d'étranglement (10) est agencé dans un boîtier situé en aval du bassin de stockage.

13. Bassin de stockage selon l'une des revendications 10 à 12, dans lequel l'axe de rotation (16) de l'organe d'étranglement (10) s'étend sensiblement perpendiculairement à la direction d'écoulement.

14. Bassin de stockage selon l'une des revendications 10 à 12, dans lequel l'axe de rotation (16) de l'organe d'étranglement (10) s'étend sensiblement parallèlement à la direction d'écoulement.
